(19) Europäisches Patentamt / European Patent Office / Office européen des brevets

(11) **EP 1 806 860 A1**

(12) **EUROPEAN PATENT APPLICATION**
published in accordance with Art. 158(3) EPC

(43) Date of publication:
**11.07.2007 Bulletin 2007/28**

(51) Int Cl.:
*H04J 11/00* (2006.01)    *H04B 7/26* (2006.01)

(21) Application number: **05809657.9**

(22) Date of filing: **28.11.2005**

(86) International application number:
**PCT/JP2005/021798**

(87) International publication number:
**WO 2006/059565 (08.06.2006 Gazette 2006/23)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.11.2004 JP 2004346482**

(71) Applicant: **MATSUSHITA ELECTRIC INDUSTRIAL CO., LTD.**
**Osaka 571-8501 (JP)**

(72) Inventors:
• **YOSHII, Isamu,**
**Matsushita Electric Industrial Co.,Ltd.**
**Chuo-ku,**
**Osaka-shi,**
**Osaka 540-6319 (JP)**

• **WENGERTER, Christian,**
**Matsushita Electric Industrial Co.,Ltd.**
**Chuo-ku,**
**Osaka-shi,**
**Osaka 540-6319 (JP)**

(74) Representative: **Grünecker, Kinkeldey, Stockmair & Schwanhäusser Anwaltssozietät Maximilianstrasse 58 80538 München (DE)**

(54) **WIRELESS COMMUNICATION APPARATUS AND WIRELESS COMMUNICATION METHOD IN MULTICARRIER COMMUNICATION**

(57)    A wireless communication apparatus capable of raising the throughput in a multicarrier communication. In the wireless communication apparatus, a subcarrier block deciding part (207) decides the number of subcarriers per subcarrier block in accordance with a fading frequency notified through a notification signal. The greater the fading frequency $\Delta f$ is, the greater number of subcarriers per subcarrier block is decided by the subcarrier block deciding part (207). That is, the greater the fading frequency $\Delta f$ is, the smaller number of subcarriers included in each of OFDM symbols is established by the subcarrier block deciding part (207). An MCS deciding part (209) decides, based on CQI notified through a notification signal, an MCS level for each subcarrier block.

| CLASS | FADING FREQUENCY: $\Delta f$ | THE NUMBER OF SUBCARRIERS PER SUBCARRIER BLOCK |
|-------|------------------------------|------------------------------------------------|
| A | $\Delta f < 50Hz$ | 1 |
| B | $50Hz \leqq \Delta f < 100Hz$ | 2 |
| C | $100Hz \leqq \Delta f < 200Hz$ | 4 |
| D | $200Hz \leqq \Delta f$ | 8 |

FIG.3

EP 1 806 860 A1

**Description**

Technical Field

The present invention relates to a radio communication apparatus and radio communication method in multicarrier communication.

Background Art

In recent years, in radio communication, in particular, in mobile communication, various kinds of information such as images and data other than speech have become targets of transmission. It is expected that demand for the transmission of various kinds of content increases in the future, and necessity for high-speed transmission therefore further increases. However, when high-speed transmission is carried out in mobile communication, the influence of delayed waves due to multipath cannot be ignored, and transmission characteristics deteriorate due to frequency selective fading.

Multicarrier (MC) communication such as OFDM (Orthogonal Frequency Division Multiplexing) is attracting attention as one of techniques for combating frequency selective fading. Multicarrier communication is a technique that carries out high-speed transmission by transmitting data using a plurality of carriers (subcarriers) whose transmission speed is suppressed to a level where frequency selective fading does not occur. With the OFDM scheme, in particular, the subcarriers on which data is arranged are orthogonal each other. Therefore, the OFDM scheme offers high efficiency of frequency use in multicarrier communication, and can be implemented with a relatively simple hardware configuration. Accordingly, the OFDM scheme particularly attracts attention, and various related studies are being undertaken.

One example of such studies proposes a technique of performing adaptive modulation in OFDM transmission (see, for example, Non-Patent Document 1). Furthermore, the technique of carrying out this adaptive modulation on a per subcarrier block basis is also studied. Here, a subcarrier block refers to a group of one or more subcarriers out of a plurality of subcarriers configuring an OFDM symbol.

Hereinafter, an OFDM transmission system will be described below where adaptive modulation is carried out on a per subcarrier block basis. In the following description, cases will be described where the OFDM symbol is transmitted in downlink.

First, amobile stationmeasures a receivedsignal to noise ratio (SNR) for each subcarrier block of the pilot signal transmitted from a base station and reports the received SNR to the base station as a channel quality indicator (CQI).

The base station decides the modulation and coding scheme (MCS) level for each subcarrier block based on the CQI reported from the mobile station, modulates data of each subcarrier according to the decided MCS level, and generates and transmits an OFDM symbol to the mobile station.

Non-Patent Document 1: IEEE Transactions on Vehicular Technology, Vol.49, No.5, September 2000, Adaptive Modulation Techniques for Duplex OFDM Transmission

Disclosure of Invention

Problems to be Solved by the Invention

However, when the fading frequency on the channel between the mobile station and the base station is relatively high, the channel state substantially changes between upon SNR measurement at the mobile station and upon transmission of the OFDM symbol at the base station, and, as a result, inappropriate MCS level may be selected at the base station. For example, when the channel state is better upon transmission of the OFDM symbol at the base station than upon SNR measurement at the mobile station, a lower MCS level than the appropriate MCS level (that is, lower transmission rate than the appropriate transmission rate) is selected, and therefore transmission rate decreases compared to the ideal state, and throughput also decreases. Conversely, when the channel state is worse upon transmission of the OFDM symbol at the base station than upon SNR measurement at the mobile station, a higher MCS level than the appropriate MCS level (that is, higher transmission rate than the appropriate transmission rate) is selected, and therefore errors are likely to occur in the OFDM symbol, and throughput decreases.

It is therefore an obj ect of the present invention to provide a radio communication apparatus and radio communication method capable of improving throughput in multicarrier communication.

Means for Solving the Problems

A radio communication apparatus of the present invention is a radio communication apparatus on a multicarrier signal transmitting side that transmits a multicarrier signal comprised of a plurality of subcarriers configuring a subcarrier block and adopts a configuration including: a first deciding section that decides the number of subcarriers per subcarrier block according to a fading frequency; and a second deciding section that decides an MCS level on a per subcarrier block basis based on a channel quality indicator.

Advantageous Effect of the Invention

According to the present invention, it is possible to increase throughput in multicarrier communication.

Brief Description of Drawings

FIG. 1 is a block diagram showing the configuration of a radio communication apparatus (on the multicarrier signal receiving side) according to Embodiment 1 of the present invention;

FIG. 2 is a block diagram showing the configuration of the radio communication apparatus (on the multicarrier signal transmitting side) according to Embodiment 1 of the present invention;

FIG. 3 illustrates operation of a subcarrier block deciding section according to Embodiment 1 of the present invention;

FIG. 4 illustrates operation of the subcarrier block deciding section according to Embodiment 1 of the present invention (in the case of class A);

FIG. 5 illustrates operation of the subcarrier block deciding section according to Embodiment 1 of the present invention (in the case of class B);

FIG. 6 illustrates operation of the subcarrier block deciding section according to Embodiment 1 of the present invention (in the case of class C);

FIG. 7 illustrates operation of the subcarrier block deciding section according to Embodiment 1 of the present invention (in the case of class D);

FIG. 8 is an MCS table according to Embodiment 1 of the present invention;

FIG. 9 is an example of a CQI report according to Embodiment 1 of the present invention;

FIG. 10 illustrates operation of the subcarrier block deciding section according to Embodiment 1 of the present invention (in the case of class A);

FIG. 11 illustrates operation of an MCS deciding section according to Embodiment 1 of the present invention (in the case of class B);

FIG. 12 illustrates operation of the MCS deciding section according to Embodiment 1 of the present invention (in the case of class C);

FIG. 13 illustrates operation of the MCS deciding section according to Embodiment 1 of the present invention (in the case of class D);

FIG. 14 is an example of coding block arrangement according to Embodiment 1 of the present invention (in the case of class A);

FIG. 15 is an example of coding block arrangement according to Embodiment 1 of the present invention (in the case of class B);

FIG. 16 is an example of coding block arrangement according to Embodiment 1 of the present invention (in the case of class C);

FIG. 17 is an example of coding block arrangement according to Embodiment 1 of the present invention (in the case of class D);

FIG. 18 is an MCS table according to Embodiment 2 of the present invention; and

FIG. 19 is a block diagram showing the configuration of a radio communication apparatus (on the multicarrier signal receiving side) according to Embodiment 3 of the present invention.

Best Mode for Carrying Out the Invention

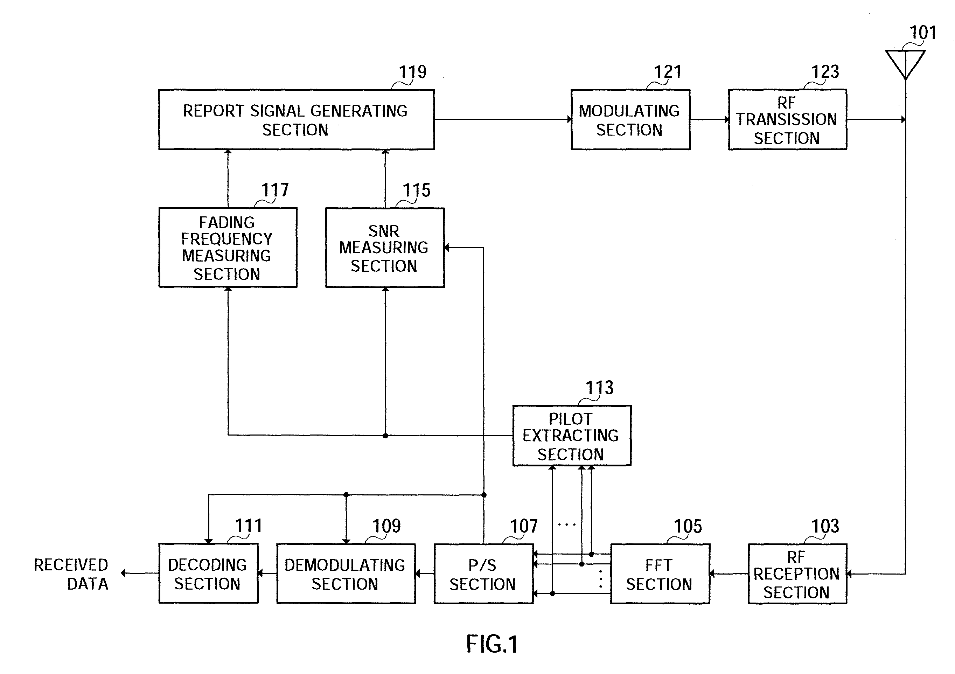

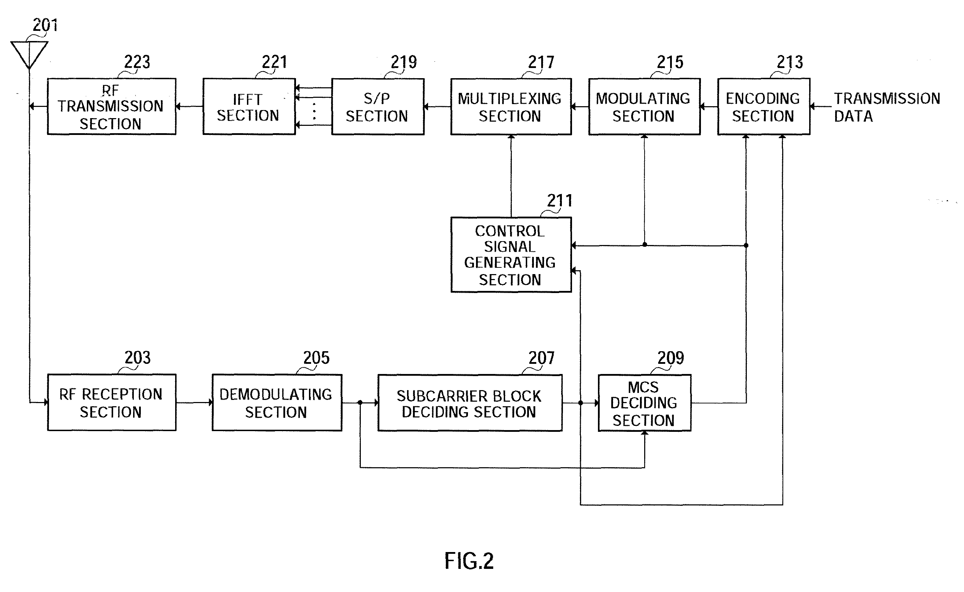

Embodiments of the present invention will now be described in detail with reference to the accompanying drawings. The radio communication apparatus described below can be used by being provided to a base station apparatus or terminal apparatus used in a mobile communication system. When multicarrier signals are transmitted in downlink, the radio communication apparatus shown in FIG.1 is provided to the terminal apparatus, and the radio communication apparatus shown in FIG.2 is provided to the base station apparatus. Further, when multicarrier signals are transmitted in uplink, the radio communication apparatus shown in FIG.1 is provided to the base station apparatus, and the radio communication apparatus shown in FIG.2 is provided to the terminal apparatus.

(Embodiment 1)

First, the configuration of the radio communication apparatus on the multicarrier signal receiving side is shown in FIG.1.

In the radio communication apparatus (on the multicarrier signal receiving side) shown in FIG.1, RF reception section 103 performs predetermined radio processing such as down-conversion on the OFDM symbol (multicarrier signal) received via antenna 101 and inputs the result to FFT section 105. The received OFDM symbol includes a control signal indicating the number of subcarriers per subcarrier block and an MCS level for each subcarrier block.

FFT section 105 performs fast Fourier transform (FFT) processing on the inputted OFDM symbol and inputs the signals for each subcarrier to P/S section 107 and pilot extracting section 113.

P/S section 107 converts the signals for each subcarrier inputted in parallel to serial signals and inputs the results to demodulation section 109. Further, P/S section 107 extracts the control signal multiplexed on the signals for each subcarrier and inputs the control signal to demodulation section 109 and decoding section 111.

Demodulation section 109 demodulates the signals for each subcarrier according to the control signal. Decoding section 111 decodes the signals for each subcarrier according to the control signal. By this means, received data is obtained.

Pilot extracting section 113 extracts the pilot signal of each subcarrier from the signals after FFT and inputs the pilot signal to SNR measurement section 115 and fading frequency measuring section 117.

SNR measuring section 115 measures the SNR for each subcarrier using the pilot signal and inputs the measured SNR value to report signal generating section 119 as a channel quality indicator (CQI).

Fading frequency measuring section 117 measures fading frequency Δf according to the following equation 1 using the pilot signal and inputs the measured fading frequency value to report signal generating section 119. In equation 1, T is the period of the pilot signal, and r(t) is the OFDM signal.

[1]

$$\Delta f = \frac{1}{2\pi T} \tan^{-1} \frac{\mathrm{Im}[p(T)]}{\mathrm{Re}[p(T)]}$$

$$where, \qquad\qquad (\mathrm{Equation} \ 1)$$

$$p(T) = \sum_{\tau=t}^{t-T} r(\tau) \cdot r(\tau + T)$$

Report signal generating section 119 generates a report signal for reporting the fading frequency and SNR for each subcarrier and inputs the report signal to modulating section 121.

Modulating section 121 modulates the report signal and inputs the result to RF transmission section 123. The report signal is subjected to predetermined radio processing such as up-conversion at RF transmission section 123 and then transmitted to the radio communication apparatus shown in FIG.2 via antenna 101.

Next, the configuration of the radio communication apparatus on the multicarrier signal transmitting side is shown in FIG.2.

At the radio communication apparatus (on the multicarrier signal transmitting side) shown in FIG.2, RF reception section 203 performs predetermined radio processing such as down-conversion on the report signal received via antenna 201 and inputs the result to demodulating section 205. This report signal includes the fading frequency value and the SNR value for each subcarrier.

Demodulation section 205 demodulates the report signal and inputs the result to subcarrier block deciding section 207 and MCS deciding section 209.

Subcarrier block deciding section 207 decides the number of subcarriers (block size) per subcarrier block according to the fading frequency reported by the report signal. Subcarrier block deciding section 207 inputs the decided number of subcarriers to MCS deciding section 209, control signal generating section 211 and encoding section 213. The method of deciding the number of subcarriers per subcarrier block will be described later in more detail.

MCS deciding section 209 decides the MCS level for each subcarrier block based on the CQI reported by the report signal and inputs the decided MCS level to control signal generating section 211, encoding section 213 and modulating section 215. The method of deciding the MCS level will be described later in more detail.

Control signal generating section 211 generates a control signal indicating the number of subcarriers per subcarrier block and the MCS level for each subcarrier block and inputs the control signal to multiplexing section 217.

Encoding section 213 encodes the transmission data at the coding rate of the MCS level decided at MCS deciding section 209 and inputs the result to modulating section 215. At this time, encoding section 213 changes the coding block size according to the number of subcarriers per subcarrier block. The control of the coding block size will be specifically described later.

Modulating section 215 modulates the encoded transmission data with a modulation scheme of the MCS level decided at MCS deciding section 209 and inputs the result to multiplexing section 217.

Multiplexing section 217 multiplexes the modulated symbol and the control signal and inputs the result to S/P section 219.

S/P section 219 converts the signal inputted in series from multiplexing section 217 to parallel signals, and inputs the results to IFFT section 221.

IFFT section 221 performs inverse fast Fourier transform (IFFT) processing on the signals inputted from S/P section 219 and generates an OFDM symbol (multicarrier signal). This OFDM symbol is comprised of a plurality of subcarriers configuring subcarrier blocks.

The OFDM symbol including the control signal is subjected to predetermined radio processing such as up-conversion at RF transmission section 223, and transmitted by radio to the radio communication apparatus shown in FIG.1 via antenna 201.

Next, the method of selecting the number of subcarriers per subcarrier block will be described.

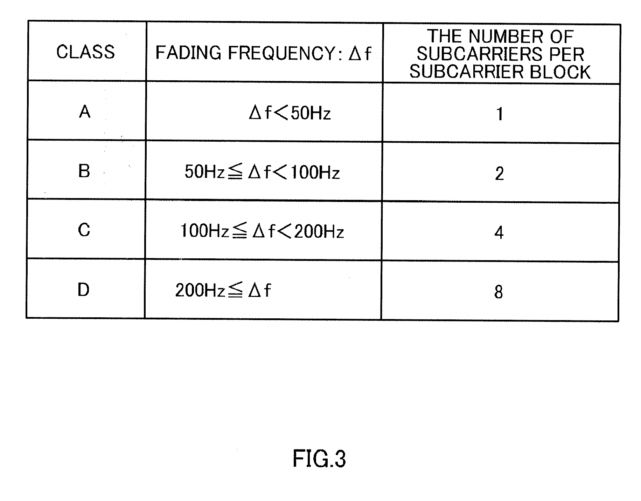

As shown in FIG.3 to FIG.7, subcarrier block deciding section 207 increases the number of subcarriers per subcarrier block in response to an increase in fading frequency $\Delta f$. In FIG. 3 to FIG. 7, for ease of explanation, an example will be shown where one OFDM symbol is comprised of eight subcarriers (SC 1 to SC 8).

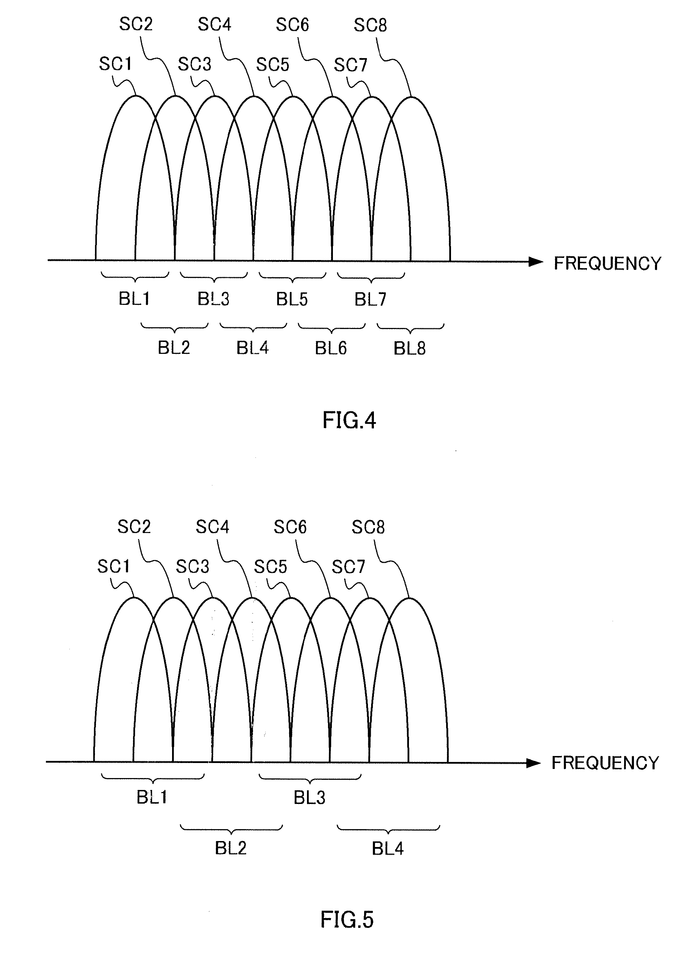

For example, when class A: $\Delta f < 50Hz$ in FIG.3, the number of subcarriers per subcarrier block is one. Therefore, as shown in FIG.4, SC 1 to SC 8 become subcarrier blocks BL 1 to BL 8, respectively, and one OFDM symbol includes eight subcarrier blocks.

Further, when class B: $50Hz \leq \Delta f < 100Hz$, the number of subcarriers per subcarrier block is two. Therefore, as shown in FIG.5, SC 1 and SC 2 configure BL 1, SC 3 and SC 4 configure BL 2, SC 5 and SC 6 configure BL 3, SC 7 and SC 8 configure BL 4, and one OFDM symbol includes four subcarrier blocks.

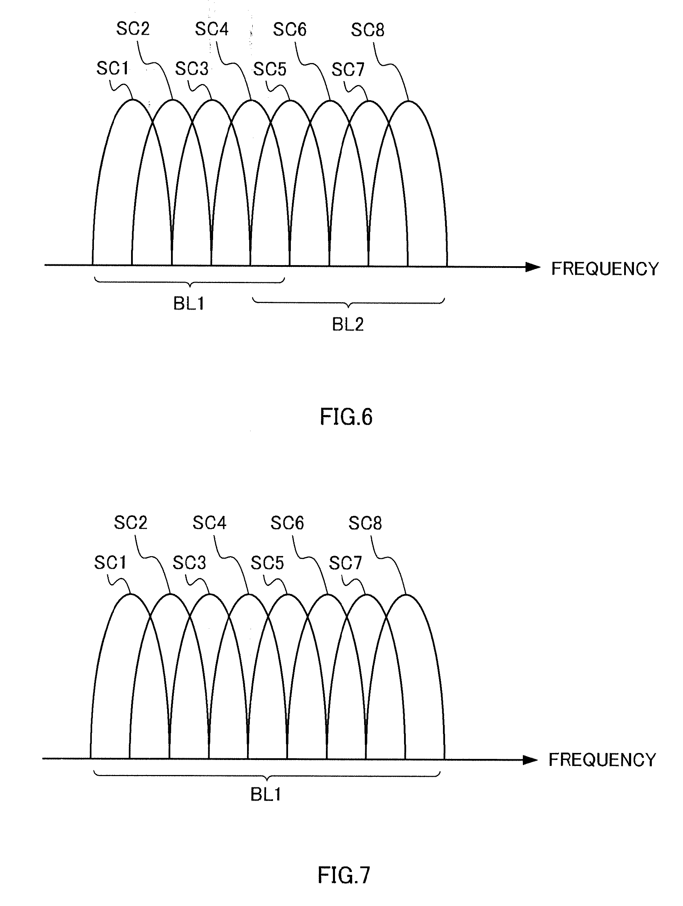

Further, when class C: $100Hz \leq \Delta f < 200Hz$, the number of subcarriers per subcarrier block is four. Therefore, as shown in FIG.6, SC 1 to SC 4 configure BL 1, SC 5 to SC 8 configure BL 2, and one OFDM symbol includes two subcarrier blocks.

Further, when class D: $200Hz \leq \Delta f$, the number of subcarriers per subcarrier block is eight. Therefore, as shown in FIG.7, SC 1 to SC 8 configure BL 1, and one OFDM symbol includes one subcarrier block.

In this way, subcarrier block deciding section 207 changes the number of subcarriers per subcarrier block according to the fading frequency and increases the number of subcarriers per subcarrier block in response to an increase in the fading frequency. That is, subcarrier block deciding section 207 decreases the number of subcarrier blocks included in one OFDM symbol in response to an increase in the fading frequency.

Next, the method of deciding the MCS level will be described.

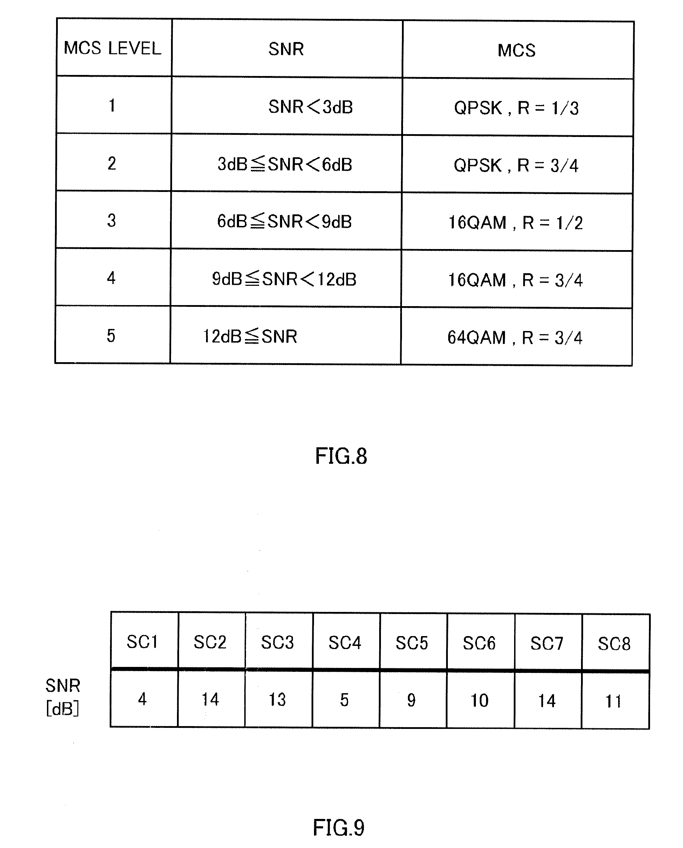

MCS deciding section 209 has the table shown in FIG.8, and decides the MCS level for each subcarrier block referring to this table.

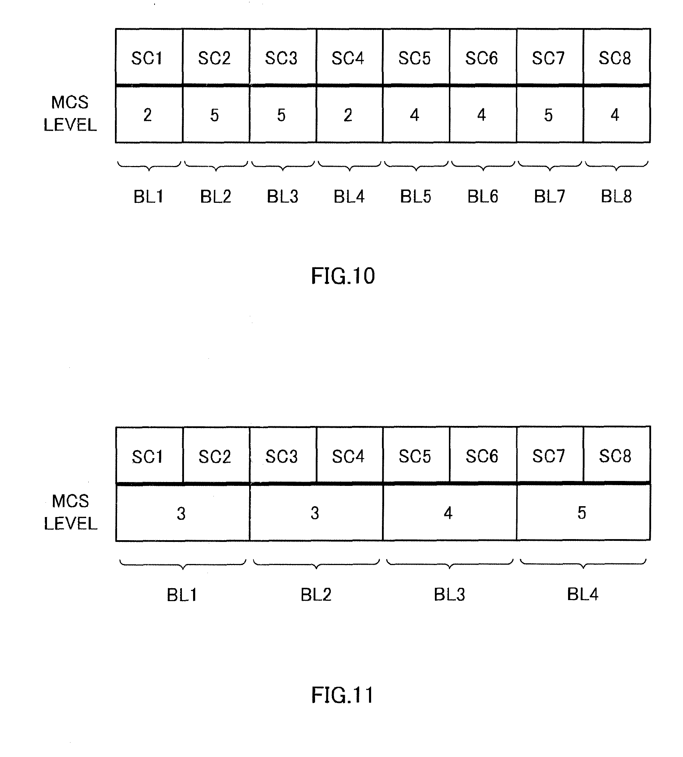

For example, it is assumed that the channel quality indicator as shown in FIG.9 is reported for subcarriers SC 1 to SC 8. When fading frequency $\Delta f$ is in class A, SC 1 to SC 8 become subcarrier blocks BL 1 to BL 8, respectively. Therefore, the MCS levels of SC 1 to SC 8 are decided for BL 1 to BL 8 as shown in FIG.10 referring to the table shown in FIG.8.

When fading frequency $\Delta f$ is in class B, there are four subcarrier blocks BL 1 to BL 4. Therefore, an average SNR is obtained for each of BL 1 to BL 4, and, based on each average SNR, the MCS levels for BL 1 to BL 4 are decided as shown in FIG.11 referring to the table shown in FIG.8.

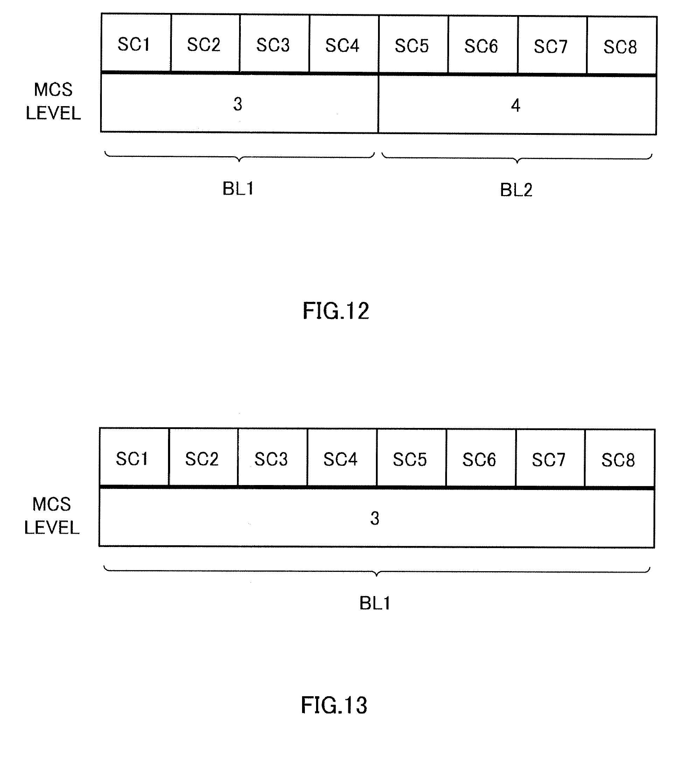

When fading frequency $\Delta f$ is in class C, there are two subcarrier blocks BL 1 and BL 2 . Therefore, an average SNR is obtained for each of BL 1 and BL 2, and, based on each average SNR, the MCS levels for BL 1 and BL 2 are decided as shown in FIG.12 referring to the table shown in FIG.8.

When fading frequency $\Delta f$ is in class D, SC 1 to SC 8 configure one BL 1. Therefore, an average of all SNRs of SC 1 to SC 8 is obtained, and, based on this average SNR, the same MCS level is decided for SC 1 to SC 8 as shown in FIG.13 referring to the table shown in FIG.8.

In this way, subcarrier block deciding section 207 decides the MCS level on a per subcarrier block basis, and the same MCS level is applied on a per subcarrier block basis to the subcarriers included in each subcarrier block.

In this way, when the number of subcarriers per subcarrier block increases (that is, the number of subcarrier blocks included in one OFDM symbol decreases) in response to an increase in fading frequency $\Delta f$, time fluctuation of synthesized power of the subcarrier blocks becomes moderate according to the law of large numbers because of random fading, so that it is possible to alleviate the influence of fading fluctuation. Therefore, even when the fading frequency on the channel is relatively high, and it is considered that the channel state substantially changes between upon SNR measurement and upon OFDM symbol transmission, appropriate MCS level is more likely to be selected in each subcarrier, so that it is possible to improve throughput in multicarrier communication.

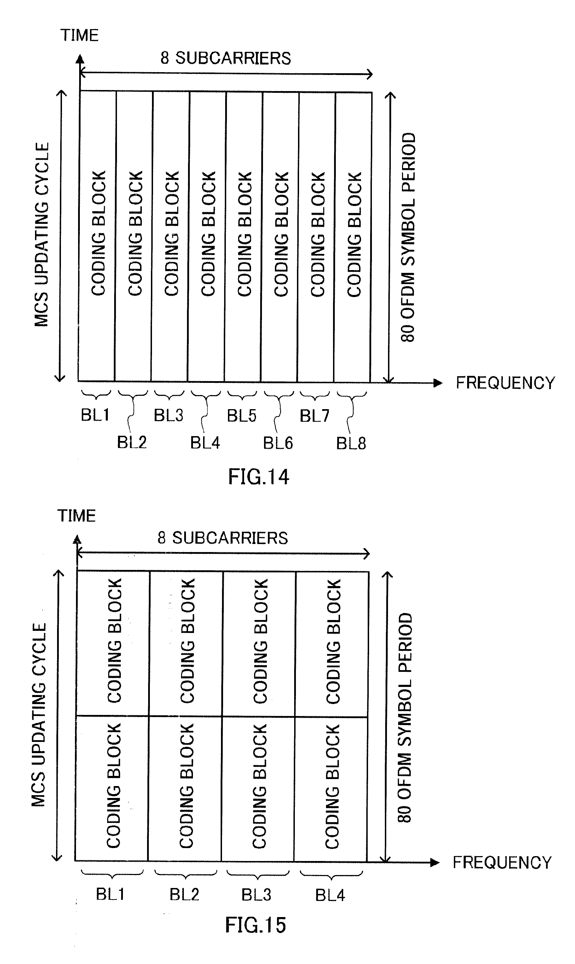

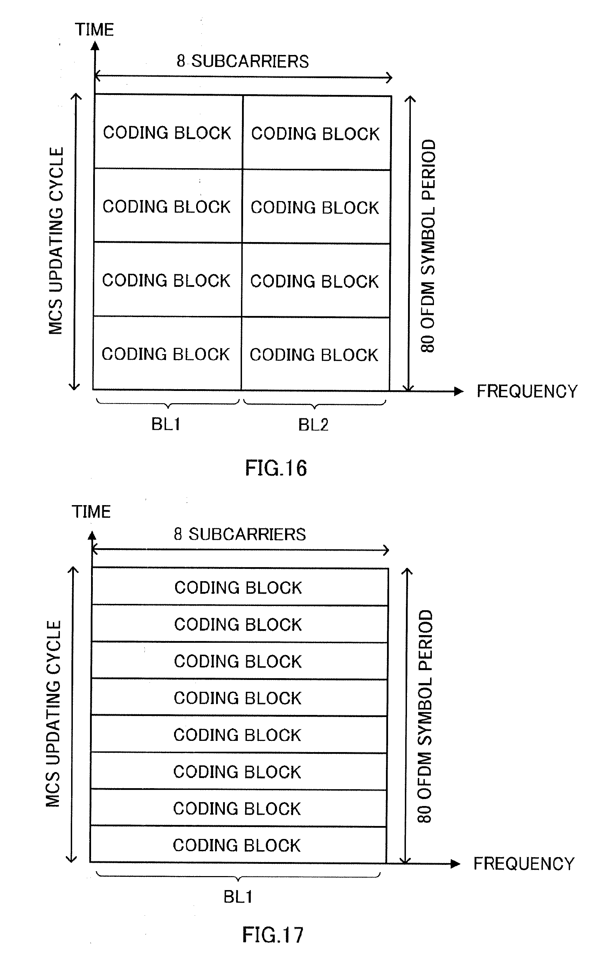

Next, the coding block size control at encoding section 213 of FIG.2 will be shown in FIG.14 to FIG.17.

If the number of symbols per coding block changes in accordance with the change of the number of subcarrier blocks included in one OFDM symbol, the number of bits of the coding block becomes different before and after the number of subcarrier blocks changes, and therefore error rate characteristics will change. With this, decoding appropriate MCS levels is not possible.

In this embodiment, as shown in FIG.14 to FIG.17, encoding section 213 makes the coding block size larger in the frequency domain and makes the coding block size smaller in the time domain in accordance with a decrease in the number of subcarrier blocks included in one OFDM symbol (that is, in accordance with an increase in the number of subcarriers per subcarrier block). Specifically, for example, when the number of subcarrier blocks becomes half, the coding block size doubles in the frequency domain, and the coding block size is made half in the time domain. By this means, even if the number of subcarrier blocks included in one OFDM symbol changes, it is possible to keep the number of symbols per coding block constant (eighty symbols in FIG.14 to FIG.17) and decide appropriate MCS levels. Here, an example will be shown where the MCS updating cycle is the eighty OFDM symbol period.

(Embodiment 2)

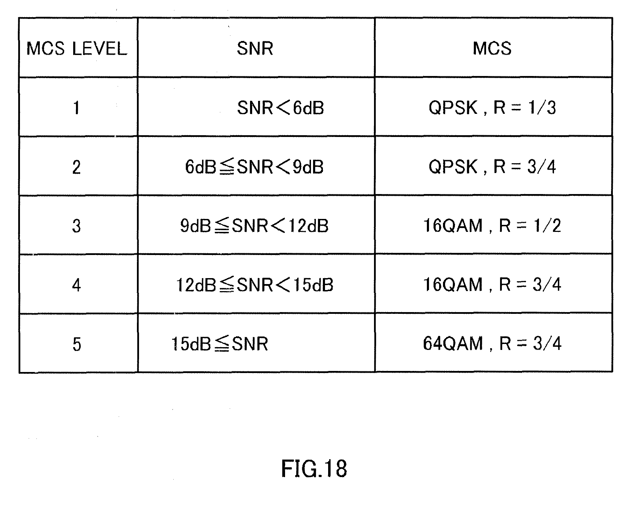

MCS deciding section 209 according to Embodiment 2 has a plurality of tables according to fading frequency Δf. That is, MCS deciding section 209 has the table shown in FIG.8 for class A, B and C, and the table shown in FIG. 18 for class D. MCS deciding section 209 then decides the MCS level referring to the table shown in FIG.8 when fading frequency Δf is in class A to class C, and decides the MCS level referring to the table shown in FIG.18 when fading frequency Δf is in class D.

In the table shown in FIG.18, SNR is provided with a 3dB margin in each MCS level with respect to the table shown in FIG.8. That is, different MCS levels are set for the same SNR between FIG.8 and FIG.18. By this means, in the case of class D, when the SNR is larger by 3 dB compared to class A to class C, the same MCS level is selected as class A to class C. In other words, in the case of class D, when the SNR is the same, the MCS level which is smaller by one compared to class A to class C is selected. This is based on the prediction that when fading frequency Δf is 200 Hz or greater, the channel quality decreases by approximately 3 dB.

In this way, by changing the table to refer to upon MCS level decision according to the scale of fading frequency, the MCS level can be decided taking into consideration deterioration of channel quality for the case of high fading frequency, so that it is possible to select more appropriate MCS.

(Embodiment 3)

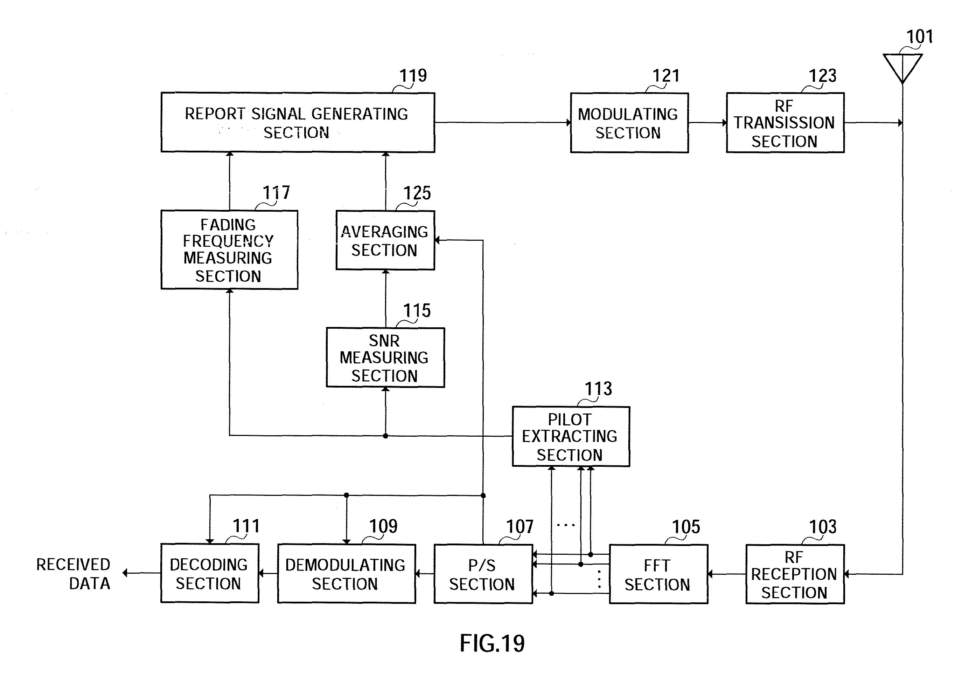

The configuration of the radio communication apparatus (on the multicarrier signal receiving side) according to this embodiment is shown in FIG. 19. As shown in FIG.19, the radio communication apparatus according to this embodiment has averaging section 125 in addition to the configuration of Embodiment 1 (FIG.1). In FIG.19, components that are identical with those in FIG.1 will be assigned the same reference numerals without further explanations.

P/S section 107 extracts the control signal multiplexed on the signal for each subcarrier and inputs the control signal to demodulating section 109, decoding section 111 and averaging section 125.

SNR measuring section 115 measures the SNR for each subcarrier using the pilot signal and inputs the measured SNR values to averaging section 125.

Averaging section 125 averages the SNR values on a per subcarrier block basis based on the number of subcarriers per subcarrier block indicated by the control signal. When fading frequency Δf reported to the radio communication apparatus shown in FIG.2 is in class B, the number of subcarriers per subcarrier block is two, which provides four subcarrier blocks BL 1 to BL 4, and an average SNR is obtained for each of BL 1 to BL 4 . Further, when reported fading frequency Δf is in class C, the number of subcarriers per subcarrier block is four, which provides two subcarrier blocks BL 1 and BL 2, and an average SNR is obtained for each of BL 1 and BL 2. Further, when reported fading frequency Δf is in class D, the number of subcarriers per subcarrier block is eight, and eight subcarriers of SC 1 to SC 8 configure one BL 1, and an average of all SNRs of SC 1 to SC 8 is obtained. Averaging section 125 inputs the average SNR obtained in this way to report signal generating section 119 as a channel quality indicator (CQI). When reported fading frequency Δf is in class A, the number of subcarriers per subcarrier block is eight, and SC 1 to SC 8 configure subcarrier blocks BL 1 to BL 8, respectively. Therefore, averaging section 125 inputs the SNR value for each subcarrier inputted from SNR measuring section 115 as is, to report signal generating section 119.

In this way, in this embodiment, the amount of the report signal is reduced by reducing the channel quality indicator.

Each function block employed in the description of each of the aforementioned embodiments may typically be implemented as an LSI constituted by an integrated circuit. These may be individual chips or partially or totally contained on a single chip.

"LSI" is adopted here but this may also be referred to as "IC", "system LSI", "super LSI", or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application in biotechnology is also possible.

The present application is based on Japanese patent application No.2004-346482, filed on November 30, 2004, the entire content of which is expressly incorporated herein by reference.

Industrial Applicability

The present invention is suitable for use in a radio communication base station apparatus, radio communication terminal apparatus, or the like, used in a mobile communication system.

**Claims**

1. A radio communication apparatus on a multicarrier signal transmitting side that transmits a multicarrier signal comprised of a plurality of subcarriers configuring a subcarrier block, the radio communication apparatus comprising:

   a first deciding section that decides the number of subcarriers per subcarrier block according to a fading frequency; and
   a second deciding section that decides an MCS level on a per subcarrier block basis based on a channel quality indicator.

2. The radio communication apparatus according to claim 1, further comprising a transmission section that transmits the multicarrier signal including a signal indicating the number of subcarriers and the MCS level.

3. The radio communication apparatus according to claim 1, wherein the first deciding section increases the number of subcarriers per subcarrier block in response to an increase in the fading frequency.

4. The radio communication apparatus according to claim 1, further comprising an encoding section that makes a coding block size larger in the frequency domain and makes the codingblock size smaller in the time domain in response to an increase in the number of subcarriers per subcarrier block.

5. The radio communication apparatus according to claim 1, further comprising a plurality of tables that provide a plurality of channel quality indicators and a plurality of MCS levels corresponding to the plurality of channel quality indicators, wherein:

   the plurality of tables provide different MCS levels for the same channel quality indicator according to the fading frequency; and
   the second deciding section decides an MCS level referring to one of the plurality of tables according to the fading frequency.

6. A radio communication apparatus on a multicarrier signal receiving side that receives a multicarrier signal comprised of a plurality of subcarriers configuring a subcarrier block, the radio communication apparatus comprising:

   a reception section that receives the multicarrier signal including a signal indicating the number of subcarriers and the MCS level;
   a measuring section that measures channel quality per subcarrier;
   an averaging section that averages channel quality of the subcarriers for each subcarrier block based on the number of subcarriers and obtains an average value of each subcarrier block; and
   a transmission section that transmits a report signal including the average value.

**7.** A mobile communication terminal apparatus comprising the radio communication apparatus according to claim 1.

**8.** A mobile communication base station apparatus comprising the radio communication apparatus according to claim 1.

**9.** A radio communication method used in a radio communication apparatus that transmits a multicarrier signal comprised of a plurality of subcarriers configuring a subcarrier block, the radio communication method comprising:

changing the number of subcarriers per subcarrier block according to a fading frequency; and
deciding an MCS level on a per subcarrier block basis based on a channel quality indicator.

FIG.1

EP 1 806 860 A1

FIG.2

| CLASS | FADING FREQUENCY: $\Delta f$ | THE NUMBER OF SUBCARRIERS PER SUBCARRIER BLOCK |
|---|---|---|
| A | $\Delta f < 50Hz$ | 1 |
| B | $50Hz \leqq \Delta f < 100Hz$ | 2 |
| C | $100Hz \leqq \Delta f < 200Hz$ | 4 |
| D | $200Hz \leqq \Delta f$ | 8 |

FIG.3

SC2     SC4     SC6     SC8

SC1    SC3    SC5    SC7

FREQUENCY

BL1    BL3    BL5    BL7

BL2    BL4    BL6    BL8

**FIG.4**

SC2     SC4     SC6     SC8

SC1    SC3    SC5    SC7

FREQUENCY

BL1        BL3

BL2        BL4

**FIG.5**

FIG.6

FIG.7

| MCS LEVEL | SNR | MCS |
|-----------|-----|-----|
| 1 | SNR < 3dB | QPSK , R = 1/3 |
| 2 | 3dB ≦ SNR < 6dB | QPSK , R = 3/4 |
| 3 | 6dB ≦ SNR < 9dB | 16QAM , R = 1/2 |
| 4 | 9dB ≦ SNR < 12dB | 16QAM , R = 3/4 |
| 5 | 12dB ≦ SNR | 64QAM , R = 3/4 |

FIG.8

|  | SC1 | SC2 | SC3 | SC4 | SC5 | SC6 | SC7 | SC8 |
|---|-----|-----|-----|-----|-----|-----|-----|-----|
| SNR [dB] | 4 | 14 | 13 | 5 | 9 | 10 | 14 | 11 |

FIG.9

| | SC1 | SC2 | SC3 | SC4 | SC5 | SC6 | SC7 | SC8 |
|---|---|---|---|---|---|---|---|---|
| MCS LEVEL | 2 | 5 | 5 | 2 | 4 | 4 | 5 | 4 |

BL1  BL2  BL3  BL4  BL5  BL6  BL7  BL8

FIG.10

| | SC1 | SC2 | SC3 | SC4 | SC5 | SC6 | SC7 | SC8 |
|---|---|---|---|---|---|---|---|---|
| MCS LEVEL | 3 | | 3 | | 4 | | 5 | |

BL1  BL2  BL3  BL4

FIG.11

| SC1 | SC2 | SC3 | SC4 | SC5 | SC6 | SC7 | SC8 |
|-----|-----|-----|-----|-----|-----|-----|-----|

MCS
LEVEL

| 3 | 4 |
|---|---|

BL1      BL2

FIG.12

| SC1 | SC2 | SC3 | SC4 | SC5 | SC6 | SC7 | SC8 |
|-----|-----|-----|-----|-----|-----|-----|-----|

MCS
LEVEL

| 3 |
|---|

BL1

FIG.13

TIME

8 SUBCARRIERS

MCS UPDATING CYCLE

CODING BLOCK | CODING BLOCK | CODING BLOCK | CODING BLOCK | CODING BLOCK | CODING BLOCK | CODING BLOCK | CODING BLOCK

80 OFDM SYMBOL PERIOD

FREQUENCY

BL1　BL2　BL3　BL4　BL5　BL6　BL7　BL8

FIG.14

TIME

8 SUBCARRIERS

MCS UPDATING CYCLE

CODING BLOCK | CODING BLOCK | CODING BLOCK | CODING BLOCK
CODING BLOCK | CODING BLOCK | CODING BLOCK | CODING BLOCK

80 OFDM SYMBOL PERIOD

FREQUENCY

BL1　　BL2　　BL3　　BL4

FIG.15

FIG.16

FIG.17

| MCS LEVEL | SNR | MCS |
|---|---|---|
| 1 | SNR < 6dB | QPSK , R = 1/3 |
| 2 | 6dB ≦ SNR < 9dB | QPSK , R = 3/4 |
| 3 | 9dB ≦ SNR < 12dB | 16QAM , R = 1/2 |
| 4 | 12dB ≦ SNR < 15dB | 16QAM , R = 3/4 |
| 5 | 15dB ≦ SNR | 64QAM , R = 3/4 |

FIG.18

FIG.19

## INTERNATIONAL SEARCH REPORT

| International application No. |
|---|
| PCT/JP2005/021798 |

A. CLASSIFICATION OF SUBJECT MATTER
*H04J11/00*(2006.01), *H04B7/26*(2006.01)

According to International Patent Classification (IPC) or to both national classification and IPC

B. FIELDS SEARCHED

Minimum documentation searched (classification system followed by classification symbols)
*H04J11/00*(2006.01), *H04B7/26*(2006.01)

Documentation searched other than minimum documentation to the extent that such documents are included in the fields searched
Jitsuyo Shinan Koho          1922-1996     Jitsuyo Shinan Toroku Koho    1996-2005
Kokai Jitsuyo Shinan Koho    1971-2005     Toroku Jitsuyo Shinan Koho    1994-2005

Electronic data base consulted during the international search (name of data base and, where practicable, search terms used)
IEEEXplore

C. DOCUMENTS CONSIDERED TO BE RELEVANT

| Category* | Citation of document, with indication, where appropriate, of the relevant passages | Relevant to claim No. |
|---|---|---|
| A | WO 2004/077712 A1 (NTT Docomo Inc.), 10 September, 2004 (10.09.04), Description, pages 59 to 70 (Family: none) | 1-9 |
| A | WO 2002/009334 A1 (Mitsubishi Electric Corp.), 31 January, 2002 (31.01.02), Claims 1 to 3 & EP 1221778 A1       & KR 2002035149 A & US 2002/0181421 A1   & CN 1386344 A & TW 510091 A | 1-9 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 December, 2005 (13.12.05) | 27 December, 2005 (27.12.05) |

| Name and mailing address of the ISA/ Japanese Patent Office | Authorized officer |
|---|---|
| Facsimile No. | Telephone No. |

Form PCT/ISA/210 (second sheet) (April 2005)

**INTERNATIONAL SEARCH REPORT**

International application No.

PCT/JP2005/021798

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-44168 A (Matsushita Electric Industrial Co., Ltd.), 08 February, 2002 (08.02.02), Claims 1, 2 & AU 7276601 A          & EP 1213888 A1 & KR 2002032620 A     & CN 1386351 A & US 6788737 B1         & JP 3588040 B2 & US 2005/0002358 A1    & WO 2002/009377 A1 | 1-9 |
| P,A | JP 2005-6115 A (Matsushita Electric Industrial Co., Ltd.), 06 January, 2005 (06.01.05), Claims 1, 2 & WO 2004/112075 A1 | 1-9 |
| P,A | JP 2005-184435 A (Hitachi Kokusai Electric Inc.), 07 July, 2005 (07.07.05), Fig. 4; Par. Nos. [0027] to [0036] (Family: none) | 1-9 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004346482 A

**Non-patent literature cited in the description**

- Adaptive Modulation Techniques for Duplex OFDM Transmission. *IEEE Transactions on Vehicular Technology,* September 2000, vol. 49 (5